# EUROPEAN PATENT SPECIFICATION

(11) **EP 1 511 554 B1**
(45) Date of publication and mention of the grant of the patent: **06.01.2010**
(21) Application number: 03741794.6
(22) Date of filing: 09.05.2003
(51) Int. Cl.: B01D 53/60

(54) **PROCESS FOR REDUCING NOx IN WASTE GAS STREAMS USING CHLORINE D IOXIDE**
VERFAHREN ZUM REINIGEN VON NOx IN ABGASEN UNTER VERWENDUNG VON CHLORDIOXID
PROCEDE DE REDUCTION DE LA TENEUR EN NOx DANS DES COURANTS DE GAZ RESIDUAIRES AU MOYEN DE DIOXYDE DE CHLORE

(30) Priority: 05.06.2002 US 386560 P; 05.06.2002 US 386492 P; 24.01.2003 US 442268 P
(43) Date of publication of application: 09.03.2005
(73) Proprietor: ExxonMobil Research and Engineering Company, Annandale NJ 08801-0900 (US)
(72) Inventor: TAKACS, Theresa, J., Annadale, VA 22003 (US); BALMER, Robert, G., Glen Gardner, NJ 08826 (US); CUNIC, John, D., Denville, NJ 07834-9532 (US); SHAW, Henry, Scotch Plains, NJ 07076 (US); YANG, Chen-Lu, Millburn, NJ 07041 (US); GU, Pin, Belleville, NJ 07109 (US)
(74) Representative: Dew, Melvyn John
(86) International application number: PCT/US2003/014654
(87) International publication number: WO 2003/103809

(56) References cited:
- EP-A- 0 199 037
- DE-A- 3 721 607
- GB-A- 1 472 985
- DATABASE WPI Derwent Publications Ltd., London, GB; AN 1977-85600y XP002252582 & JP 52 125462 A (NGK INSULATORS LTD.), 21 October 1977 (1977-10-21)

## Description

### FIELD OF THE INVENTION

The present invention relates to a process for reducing NOₓ concentrations in waste gas streams. More particularly, the present invention relates to contacting a NOₓ-containing waste gas stream with an effective amount of chlorine dioxide under conditions such that at least a fraction of the oxidizable NOₓ species present in the waste gas stream is oxidized to higher nitrogen oxides.

### BACKGROUND OF THE INVENTION

Increasingly stringent government regulatory emission standards have led refiners to explore improved technologies for reducing the concentration of nitrogen oxides ("NOₓ") in emissions from combustion and production effluent or waste gas streams. For example, the technology taught in United States Patent Number 3,957,949 to Senjo, et al. teaches a method for removing low-soluble pollutants, such as mercury and NO, from waste gas streams by use of an oxidizing agent that is released from a compound, such as sodium chlorite, that is injected into a recycle stream. Also, United States Patent Number 6,294,139 to Vicard et al. , discloses a method for removing nitrogen oxides from waste gas streams by oxidizing nitrogen oxide with chlorine dioxide or ozone, then bringing the oxidized gas in contact with sodium chlorite in a water solution. Further, it is known in the art to reduce NOₓ concentrations in combustion effluent streams by the injection of ammonia, see United States Patent Number 3,900,554 to Lyon. . After the Lyon patent, there was a proliferation of patents and publications relating to the injection of ammonia into combustion streams in order to reduce NOₓ concentration. Such patents include United States Patent Numbers 4,507,269 and 4,115,515 .

Even so, effluents released from combustion units and production streams, such as the regenerator off-gas of a fluidized catalytic cracking ("FCC") unit, remain a source of NOₓ emissions from refineries. Many fluidized catalytic cracking process units incorporate wet gas scrubbers to remove attrited catalyst fines. Wet gas scrubbers have the ancillary benefit of reducing NO₂ emissions. While scrubbing is effective for reducing NO₂ emissions, it is not as effective for reducing NO emissions. Since a majority (typically 90%) of the NOₓ contained on FCC unit's waste gas streams is NO, there is a need for a method for reducing NO emissions from an FCC unit's waste gas (or "offgas") in order to obtain further reductions in total NOₓ emissions.

One approach to reducing NO emissions involves oxidizing lower oxide NOₓ species to higher nitrogen oxides. However, the conventional methods involve either chemicals that require extended reaction periods or they create problems within the processing unit. Such problems include, for example, corrosion of materials of construction, problems with treating the waste water from the unit, as well as problems relating to the removal of SOₓ species that are typically also present. For example, it is known in the art to add sodium chlorite (NaClO₂) to the wet gas scrubber liquor to oxidize NOₓ species to higher oxides such as, for example, to NO₂ and N₂O₅ which are water soluble and which can be removed from the process system, typically as nitrate and nitrite, respectively.

However, the addition of sodium chlorite to the scrubber liquor has disadvantages. For example, sodium chlorite is a costly chemical and can be consumed by side reactions, such as the oxidation of SOₓ species to higher sulfur oxides (e.g., SO₂ to SO₃). Thus, because sodium chlorite does not selectively oxidize lower oxide NOₓ species to higher nitrogen oxides, conventional methods require the use of relatively high sodium chlorite concentrations in the scrubber liquor to achieve the desired reduction of oxidizable NOₓ species. These high levels of sodium chlorite lead to high chloride levels that cause, among other things, corrosion of the scrubber's materials of construction.

Thus, there still is a need in the art for an economical and effective method to reduce the level of N_{O}x species from waste gas streams.

### SUMMARY OF THE INVENTION

In accordance with the present invention, there is provided a process for reducing NOₓ concentrations in the waste gas stream, from a fluidized catalytic cracking process unit, which stream contains both NOₓ and SOₓ compounds, which process comprises:
a) removing at least a fraction of the SOₓ species from said waste gas stream thereby producing a SOₓ depleted waste gas stream;
b) contacting said SOₓ depleted waste gas stream with an effective amount of chlorine dioxide at effective oxidation conditions that will oxidize at least a fraction of oxidizable NOₓ species to higher nitrogen oxides; and
c) removing at least a fraction of said higher nitrogen oxides from the treated waste gas stream by a means selected from the group consisting of alkaline solution absorption, reducing solution absorption, scrubbing with water, ammonia injection, and catalytic conversion.

In a preferred embodiment spray nozzles integral to a wet gas scrubber separator drum are used to contact the chlorine dioxide with the waste gas stream.

In another preferred embodiment at least a fraction of the NOₓ species initially present in the waste gas stream is removed before step a) above.

### DETAILED DESCRIPTION OF THE PRESENT INVENTION

As used herein, the terms NOₓ, NOₓ species, and nitrogen oxides refers to the various oxides of nitrogen that may be present in combustion waste gasses. Thus, the terms refer to all of the various oxides of nitrogen including, but not limited to, nitric oxide (NO), nitrogen dioxide (NO₂), nitrogen peroxide (N₂O₄), nitrogen pentoxide (N₂O₅), and mixtures thereof. Also, the term "lower nitrogen oxide" refers to nitrogen oxides that are still oxidizable to higher oxides. Nitric oxide (NO) is the most preferred nitrogen oxide to be oxidized since up to 90 wt.% of the nitrogen oxides in a typical FCC unit's waste gas is NO. Therefore, in one embodiment, the instant process is concerned with the reduction and control of NO.

The terms flue gas, wet gas, combustion effluent stream, combustion waste gas effluent stream, waste gas, offgas, and waste gas stream are sometimes used interchangeably herein. Also, the terms wet gas scrubber, scrubbing apparatus, and scrubber are also sometimes used interchangeably herein.

The present invention provides a cost effective process for removing NOₓ species from waste gas streams. The oxidation of NOₓ species to higher oxides is an effective way to remove NOₓ species from flue gas streams because the higher nitrogen oxides such as, for example, NO₂ and N₂O₅ are water more soluble than the lower nitrogen oxides, and can be more easily removed from the system as nitrate or nitrite. Thus, the instant process involves adding an effective amount of chlorine dioxide to the waste gas stream under conditions effective for oxidizing at least a fraction of the lower nitrogen oxides, particularly NO, contained in the waste gas stream are oxidized to higher nitrogen oxides (e.g., NO₂ and higher). These higher oxides may then be removed by alkaline solution absorption, reducing solution absorption, scrubbing ammonia injection, catalytic conversion and absorption with water. As used herein, an effective amount of chlorine dioxide is an amount that oxidizes at least a fraction of the oxidizable NOₓ species present in the waste gas stream.
By at least "a fraction" we mean at least 20 vol.%, for example 20 vol.% to 80 vol.%, preferably 40 vol.% to 90 vol.%, more preferably 50 vol.% to 99 vol.%, and most preferably substantially all of the lower oxide NOₓ species present in the waste gas stream are oxidized to higher nitrogen oxides.

The addition of sodium chlorite to the scrubber liquor is described in U.S. Patent Number 6,294,139. Typically, though, the reagent that oxidizes the lower nitrogen oxides to higher nitrogen oxides (e.g., NO to NO₂ and/or N₂O₅) is actually chlorine dioxide, not sodium chlorite. Thus, sodium chlorite is typically injected into the waste gas stream with an acidic component that is capable of disproportionating the sodium ions and chlorine dioxide.

Chlorine dioxide, after it disproportionates from the sodium chlorite molecule, also oxidizes SOₓ species to higher sulfur oxides. This non-preferential oxidation reaction may lead to injecting relatively high levels of sodium chlorite into the waste gas stream to reduce the NOₓ species present in the waste gas stream by a satisfactory amount. These high levels of sodium chlorite have the undesirable effects of causing corrosion of process unit hardware, causing problems with wastewater treatment, as well as increasing the total costs of reagents.

However, chlorine dioxide, as used in the instant process, is mixed with the waste gas stream at a point after removal of at least a fraction of the SOₓ species present in the waste gas stream. The SOₓ removal employed is not essential to the present invention and may be any effective method. In an embodiment, the SOₓ removal method preferably reduces the levels of SOₓ species in the waste gas stream to below 100 ppm, preferably below 50 ppm, and more preferably below 10 ppm before the sodium chlorite is mixed with the waste gas stream. It is most preferred to remove substantially all of the SOₓ present in the waste gas stream before the sodium chlorite is mixed with the waste gas stream. Non-limiting examples of SOₓ removal processes suitable for use herein include wet desulfurization methods such as water scrubbing, alkali scrubbing, magnesia scrubbing, and ammonium scrubbing, as well as dry desulfurization methods such as using manganese oxide or activated carbon. In one embodiment, the SOₓ species are removed by a wet desulfurization method, preferably by use of a wet gas scrubber.

By mixing the chlorine dioxide with the waste gas stream after the removal of at least a fraction of the SOₓ species, chlorine dioxide can be used in an amount only slightly greater than a stoichiometric amount. In general, calculating the stoichiometric amount is complicated because the method by which chlorine dioxide converts lower nitrogen oxides to higher nitrogen oxides is complex. However, while not wishing to be bound by any theory or model, it is believed that the oxidation reaction where chlorine dioxide oxidizes NOₓ can be represented by the following equation:

Equation 1: 5NO + 3ClO₂ + 4H₂O → 5HNO₃ + 3HCl.

In an embodiment, the amount of chlorine dioxide used ranges from 3 to 8 moles of ClO₂ to 5 moles of NO or, in another embodiment, 4 to 7 moles of ClO₂ to 5 moles of NO. In yet another embodiment, it is preferable to use slightly greater than stoichiometric amounts of sodium chlorite, for example, 3 to 4 moles of ClO₂ to 5 moles of NOₓ.

It should be noted that in some instances that the caustic contained in the scrubber may neutralize a fraction of the HCl in Equation 1. In such instances where the pH of the system is basic, again while not wishing to be limited by theory, it is believed that the general oxidation reaction whereby chlorine dioxide oxidizes lower nitrogen oxides to higher nitrogen oxides can be represented by the following equation:

Equation 2: 4NO + 3ClO₂⁻ + 4OH⁻ → 5HNO₃ + 3HCl.

Thus, in a basic environment, the amount of chlorine dioxide used ranges from 3 to 8 moles of ClO₂ to 4 moles of NO or, alternatively 4 to 7 moles of ClO₂ to 4 moles of NO. In yet another embodiment, it is preferred to use a slightly greater than stoichiometric amounts of sodium chlorite, for example, 3 to 4 moles of ClO₂ to 4 moles of NOₓ.

After oxidation of at least a fraction of the lower nitrogen oxides to higher nitrogen oxides, at least a fraction of the higher nitrogen oxides is removed from the waste gas stream. In one embodiment, 20 vol.% to 100 vol.% of the higher nitrogen oxides are removed after oxidation, preferably 40 vol.% to 80 vol.%, and more preferably 60 vol.% to 90 vol.% of the higher nitrogen oxides of the NOₓ species are removed after oxidation.

The removal of at least a fraction of the higher nitrogen oxides is achieved by any effective method, except sodium chlorite absorption. Effective processes include, but are not limited to, using an alkaline solution such as an aqueous caustic soda solution or a reducing solution such as an aqueous sodium thiosulfate solution, catalytic conversion, and ammonia and hydrogen injection, as described in United States Patent Number 3,900,554.

In another embodiment, the oxidized NOₓ species are removed with water. The solubility of higher oxides (such as SOₓ and N₂O₅) in water is described by J.B. Joshi, V.V. Mahajani, and V.A. Juvekar in "Invited Review: Absorption of NOx Gases," Chemical Engineering Communication, Vol. 33 pp 1-92. The most preferred embodiment of the instant process involves absorption of the oxidized NOₓ compounds with water.

As discussed, it is preferred that at least a fraction of the SOₓ species of the waste gas stream be removed, preferably by wet gas scrubbing. Wet gas scrubbing removes, among other things, attrited catalyst fines and SOₓ species. Thus, in one embodiment, the waste gas stream, is contacted directly with chlorine dioxide at a point downstream from a wet gas scrubber. By contacting the waste gas stream downstream of wet gas scrubbing, the chlorine dioxide can oxidize an increased amount of the oxidizable NOₓ species because there are lower levels of SOₓ species in the stream to compete with the oxidation reaction. Further, the relatively low addition rates of chlorine dioxide needed to oxidize the lower oxide NOₓ species to higher nitrogen oxides is beneficial in overcoming at least some of the previously mentioned problems, such as, corrosion of hardware and wastewater treatment problems.

In another embodiment, the chlorine dioxide is mixed with the waste gas in the separator drum associated with a wet gas scrubber. A separator drum typically contains hardware such as spray nozzles. In this embodiment, the chlorine dioxide is sprayed through the spray nozzles such that when the contaminated waste gas stream is fed into the separator drum, it contacts the chlorine dioxide. The chlorine dioxide can first be mixed with water, preferably deionized water, which acts as a carrier fluid to better disperse the chlorine dioxide. Also, in such an embodiment, additional amounts of deionized water can be sprayed through the spray nozzles. By additional amounts of deionized water, it is meant amounts of deionized water sufficient to absorb at least a fraction of the higher nitrogen oxides.

In another embodiment, a greater amount of chlorine dioxide necessary to oxidize a given fraction of the NOₓ species present in the waste gas stream is mixed with the waste gas stream after the SOₓ removal step. This additional amount of chlorine dioxide allows the refiner the ability to oxidize SOₓ species remaining in the waste gas stream to higher oxides after the SOₓ removal step. These higher oxides of SOₓ species can then be removed by any effective method.

In another embodiment, the waste gas stream is passed through an initial NOₓ removal step to remove a fraction of the NOₓ present in order to reduce the amount of chlorine dioxide needed to oxidize remaining oxidizable NOₓ present in the waste gas stream. In this initial NOₓ removal step, at least 10 vol.%, preferably from 10 vol.% to 30 vol.%, more preferably from 20 vol.% to 60 vol.%, and most preferably 30 vol.% to 90 vol.%, of the NOₓ species initially present in the waste gas stream are removed before the waste gas stream is mixed with the chlorine dioxide. The manner in which the NOₓ's are removed before the waste gas stream is mixed with chlorine dioxide is not critical to the present invention and may be any effective method.

The above description is directed to one preferred means for carrying out the present invention. Those skilled in the art will recognize that other means that are equally effective could be devised for carrying out the this invention as defined in the claims.

The following example will illustrate the effectiveness of the present process, but is not meant to limit the present invention.

### EXAMPLE

The effect of chlorine dioxide on the oxidation of lower oxide NOₓ species to higher oxide NOₓ species was tested in a bubble column. Chlorine dioxide was mixed with a simulated scrubber liquor that contained 1002 ppm NOₓ. In this experiment, the simulated scrubber liquor was allowed to flow at a rate of 21/min into the bubble column where it was mixed with 1.5 dm³ of a water/chlorine dioxide oxidizing solution containing 107 ppm ClO₂. The temperature of the bubble column during the experiment was monitored using a thermocouple device, and the temperature was observed to be 18°C.

A NOₓ balance was performed on the bubble column by measuring the concentration of nitrogen oxides in the simulated scrubber liquor before and after mixing with the oxidizing solution. The results of this balance are contained in Table 1 below.

**Table 1**

| Source | Compound | Initial Concentration (Moles) | Final Concentration (Moles) | Percentage of Total Final Concentration in Total Initial Concentration (%) |
|---|---|---|---|---|
| Gas | NO | 0.0017 | - | |
| Gas | NO₂ | 0.0004 | 0.0002 | |
| Aqueous | NO₂- | - | - | |
| Aqueous | NO₃- | - | 0.0019 | |
| | TOTAL | 0.0021 | 0.0021 | 100% |

## Claims

1. A process for reducing NOₓ concentrations in the waste gas stream from a fluidized catalytic cracking process unit, which stream contains both NOₓ and SOₓ species, comprising:
a) removing at least a fraction of the SOₓ species from said waste gas stream thereby producing a SOₓ depleted waste gas stream;
b) contacting said SOₓ depleted waste gas stream with an effective amount of chlorine dioxide at conditions that will oxidizes at least a fraction of oxidizable NOₓ species to higher nitrogen oxides; and
c) removing at least a fraction of said higher oxides by a means selected from the group consisting of alkaline solution absorption, reducing solution absorption, scrubbing with water, ammonia injection, and catalytic conversion.

2. The process according to claim 1 wherein step a) above is carried out by a wet desulfurization process such as water scrubbing, alkali scrubbing, magnesia scrubbing, ammonium scrubbing.

3. The process according to claim 1 wherein step a) above is carried out by a dry desulfurization process using an agent selected from manganese oxide and activated carbon.

4. The process according to claim 2 wherein said SOₓ species are removed by wet gas scrubbing.

5. The process according to claim 4 wherein said chlorine dioxide is contacted with said waste gas stream at a point downstream from the wet gas scrubber of a combustion unit.

6. The process according to claim 4 wherein said chlorine dioxide is contacted with said waste gas stream in a separation drum associated with a wet gas scrubbing unit.

7. The process according to claim 4 wherein said chlorine dioxide is contacted with said waste gas stream in a separation drum of a wet gas scrubbing unit through at least one spray nozzle.

8. The process according to claim 1 wherein said chlorine dioxide is mixed with water before contacting said waste gas stream.

9. The process according to claim 1 wherein at least a fraction of said higher nitrogen oxides are removed by a method selected from alkaline solution absorption, reducing solution absorption, scrubbing, ammonia injection, absorption with water, and catalytic conversion.

10. The process according to claim 9 wherein at least a fraction of the higher nitrogen oxides is removed by ammonia injection wherein the ammonia is injected in admixture with hydrogen.

11. The process of claim 8 wherein an amount of deionized water sufficient to absorb at least a fraction of said higher oxides is injected with said chlorine dioxide.

12. The process according to claim 2 wherein at least a fraction of NOx species initially present in said waste gas stream is removed before said step a) of claim 1 above.

## Patentansprüche

1. Verfahren zur Reduktion von NOₓ-Konzentrationen im Abgasstrom einer katalytischen Wirbelschicht-Crackverfahrensanlage, wobei der Strom sowohl NOₓ- als auch SOₓ-Spezies enthält, bei dem
a) mindestens ein Teil der SOₓ-Spezies aus dem Abgasstrom entfernt wird, wodurch ein an SOₓ verarmter Abgasstrom produziert wird;
b) der an SOₓ verarmte Abgasstrom unter Bedingungen mit einer wirksamen Menge an Chlordioxid kontaktiert wird, die mindestens einen Teil der oxidierbaren NOₓ-Spezies zu höheren Stickoxiden oxidiert, und
c) mindestens ein Teil der höheren Oxide durch ein Mittel ausgewählt aus der Gruppe bestehend aus Absorption in alkalischer Lösung, Absorption mit reduzierender Lösung, Wäsche mit Wasser, Ammoniakinjektion und katalytischer Umwandlung entfernt wird.

2. Verfahren nach Anspruch 1, bei dem die obige Stufe a) nach einem Nassentschwefelungsverfahren durchgeführt wird, wie Wasserwäsche, Alkaliwäsche, Magnesiumoxidwäsche, Ammoniakwäsche.

3. Verfahren nach Anspruch 1, bei dem die obige Stufe a) nach einem Trockenentschwefelungsverfahrens unter Verwendung eines Mittels ausgewählt aus Manganoxid und Aktivkohle durchgeführt wird.

4. Verfahren nach Anspruch 2, bei dem die SOₓ-Spezies durch Nassgaswäsche entfernt werden.

5. Verfahren nach Anspruch 4, bei dem das Chlordioxid an einem Punkt stromabwärts des Nassgaswäschers einer Verbrennungsanlage mit dem Abgasstrom kontaktiert wird.

6. Verfahren nach Anspruch 4, bei dem das Chlordioxid in einer zu einer Nassgaswaschanlage gehörenden Scheidetrommel mit dem Abgasstrom kontaktiert wird.

7. Verfahren nach Anspruch 4, bei dem das Chlordioxid in einer Scheidetrommel einer Nassgaswaschanlage mittels mindestens einer Sprühdüse mit dem Abgasstrom kontaktiert wird.

8. Verfahren nach Anspruch 1, bei dem das Chlordioxid mit Wasser gemischt wird, bevor der Abgasstrom kontaktiert wird.

9. Verfahren nach Anspruch 1, bei dem mindestens ein Teil der höheren Stickoxide durch ein Verfahren ausgewählt aus Absorption in alkalischer Lösung, Absorption in reduzierender Lösung, Wäsche, Ammoniakinjektion, Absorption mit Wasser und katalytischer Umwandlung entfernt wird.

10. Verfahren nach Anspruch 9, bei dem mindestens ein Teil der höheren Stickoxide durch Ammoniakinjektion entfernt wird, wobei das Ammoniak gemischt mit Wasserstoff injiziert wird.

11. Verfahren nach Anspruch 8, bei dem eine Menge an entionisiertem Wasser, die ausreicht, um mindestens einen Teil der höheren Oxide zu absorbieren, mit dem Chlordioxid injiziert wird.

12. Verfahren nach Anspruch 2, bei dem mindestens ein Teil der anfangs in dem Abgasstrom vorhandenen NOₓ-Spezies vor der Stufe a) des obigen Anspruchs 1 entfernt wird.

## Revendications

1. Procédé permettant de réduire les concentrations de NOₓ dans le courant de gaz résiduaire d'une unité de procédé de craquage catalytique en lit fluidisé, lequel courant contient à la fois des espèces NOₓ et des espèces SOₓ, ce procédé comprenant les étapes consistant à :
a) éliminer dudit courant de gaz résiduaire au moins une fraction des espèces SOₓ afin de produire un courant de gaz résiduaire appauvri en SOₓ ;
b) mettre en contact ledit courant de gaz résiduaire appauvri en SOₓ avec une quantité efficace de dioxyde de chlore dans des conditions qui oxyderont au moins une fraction des espèces NOₓ oxydables en oxydes d'azote supérieurs ; et
c) éliminer au moins une fraction desdits oxydes supérieurs par un moyen choisi dans le groupe constitué par l'absorption par une solution alcaline, l'absorption par une solution réductrice, le lavage à l'eau, l'injection d'ammoniac et la conversion catalytique.

2. Procédé selon la revendication 1, dans lequel l'étape a) ci-dessus est réalisée par un procédé de désulfuration par voie humide tel que lavage à l'eau, lavage avec un alcali, lavage avec de la magnésie, lavage avec de l'ammonium.

3. Procédé selon la revendication 1, dans lequel l'étape a) ci-dessus est réalisée par un procédé de désulfuration par voie sèche au moyen d'un agent choisi parmi l'oxyde de manganèse et le charbon actif.

4. Procédé selon la revendication 2, dans lequel lesdites espèces SOₓ sont éliminées par lavage à gaz humide.

5. Procédé selon la revendication 4, dans lequel ledit dioxyde de chlore est mis en contact avec ledit courant de gaz résiduaire en un point en aval du laveur à gaz humide d'une unité de combustion.

6. Procédé selon la revendication 4, dans lequel ledit dioxyde de chlore est mis en contact avec ledit courant de gaz résiduaire dans un tambour de séparation associé à une unité de lavage à gaz humide.

7. Procédé selon la revendication 4, dans lequel ledit dioxyde de chlore est mis en contact avec ledit courant de gaz résiduaire dans un tambour de séparation d'une unité de lavage à gaz humide à travers au moins une tuyère d'atomisation.

8. Procédé selon la revendication 1, dans lequel ledit dioxyde de chlore est mélangé avec de l'eau avant d'être mis en contact avec ledit courant de gaz résiduaire.

9. Procédé selon la revendication 1, dans lequel au moins une fraction desdits oxydes d'azote supérieurs est éliminée par un procédé choisi parmi l'absorption par une solution alcaline, l'absorption par une solution réductrice, le lavage, l'injection d'ammoniac, l'absorption avec de l'eau et la conversion catalytique.

10. Procédé selon la revendication 9, dans lequel au moins une fraction des oxydes d'azote supérieurs est éliminée par injection d'ammoniac, l'ammoniac étant injecté en mélange avec de l'hydrogène.

11. Procédé de revendication 8, dans lequel une quantité d'eau déminéralisée suffisante pour absorber au moins une fraction desdits oxydes supérieurs est injectée avec ledit dioxyde de chlore.

12. Procédé selon la revendication 2, dans lequel au moins une fraction des espèces NOₓ initialement présentes dans ledit courant de gaz résiduaire est éliminée avant ladite étape a) de la revendication 1 ci-dessus.
